(19)

Europäisches
Patentamt
European
Patent Office
Office européen
des brevets

(11) **EP 4 074 763 A1**

(12) **EUROPEAN PATENT APPLICATION**
published in accordance with Art. 153(4) EPC

(43) Date of publication:
**19.10.2022 Bulletin 2022/42**

(21) Application number: **21776780.5**

(22) Date of filing: **23.03.2021**

(51) International Patent Classification (IPC):
*C08J 5/18* (2006.01)    *C08F 20/06* (2006.01)
*C08F 2/44* (2006.01)    *C08K 3/34* (2006.01)
*C08K 5/053* (2006.01)    *C08L 33/04* (2006.01)
*C08L 1/28* (2006.01)    *B29C 41/24* (2006.01)
*B29C 41/46* (2006.01)

(52) Cooperative Patent Classification (CPC):
**B29C 41/24; B29C 41/46; C08F 2/44; C08F 20/06;
C08J 5/18; C08K 3/34; C08K 5/053; C08L 1/28;
C08L 33/04**

(86) International application number:
**PCT/KR2021/003545**

(87) International publication number:
**WO 2021/194202 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2020   KR 20200035147
08.09.2020   KR 20200114811
22.03.2021   KR 20210036931**

(71) Applicant: **Lg Chem, Ltd.
Seoul 07336 (KR)**

(72) Inventors:
• **YOON, Kiyoul
Daejeon 34122 (KR)**
• **KANG, Seongkyun
Daejeon 34122 (KR)**
• **KIM, Yu Jin
Daejeon 34122 (KR)**
• **KIM, Gicheul
Daejeon 34122 (KR)**
• **CHOI, Hyeon
Daejeon 34122 (KR)**
• **PARK, Se Yeol
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SUPER ABSORBENT RESIN FILM AND PREPARATION METHOD THEREOF**

(57)    The present disclosure relates to a super absorbent polymer film and a preparation method of the same. Specifically, it relates to a new type of super absorbent polymer film, which is thin and exhibits excellent absorption performance and high tensile strength. In addition, the super absorbent polymer film of the present disclosure is free from scattering or leaking, and does not require an auxiliary substance such as pulp, so that products can be made thinner and the manufacturing process and costs may be reduced.

EP 4 074 763 A1

**Description**

[TECHNICAL FIELD]

Cross-reference to Related Application(s)

This application claims the benefit of Korean Patent Applications No. 10-2020-0035147 filed on March 23, 2020, No. 10-2020-0114811 filed on September 8, 2020 and No. 10-2021-0036931 filed on March 22, 2021 with the Korean Intellectual Property Office, the disclosures of which are incorporated herein by reference in their entirety.

The present disclosure relates to a super absorbent polymer film and a preparation method of the same.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used not only for hygiene products such as disposable diapers for children, sanitary napkins, etc., but also for water retaining soil products for gardening, water stop materials for the civil engineering and construction, sheets for raising seedling, fresh-keeping agents for food distribution fields, materials for poultices, or the like.

In general, hygiene products such as various diapers, sanitary napkins, or pads for urinary incontinence include an absorber containing super absorbent polymer particles. It was common that the absorber mainly includes the super absorbent polymer particles and fluff pulp to properly fasten the super absorbent polymer particles while maintaining the shape of the absorber and hygiene products.

However, due to the presence of the fluff pulp, it was difficult to make the absorber and hygiene products slim and thin, and there was a problem such as poor wearability in which wearer's skin against the hygiene product becomes sweaty. Moreover, since the fluff pulp is mainly obtained from wood as a raw material, it has been contrary to the recent environmental protection trend, and the use of the fluff pulp has become one of the main reasons of increasing manufacturing costs of sanitary products.

In addition, current super absorbent polymers are mostly manufactured and used in the form of powder. This powder-type super absorbent polymer has limitation in the range of use and thinning, because it may be scattered or leaked when manufacturing sanitary materials or in actual use and should be used with a specific type of substrate. Further, since absorption performance of the absorber may vary depending on the content distribution of the super absorbent polymer particles, it is difficult to uniformly control the absorption characteristics.

Meanwhile, in order to solve the above problems, a sheet-type super absorbent polymer has been proposed.

For example, a method for preparing a sheet-type super absorbent polymer by kneading an acrylic acid-based monomer or pulverizing a hydrogel polymer obtained after polymerization to obtain a particulate hydrogel polymer, followed by molding is known. However, since a diameter of the hydrogel polymer particles is about 0.2 to 2.0 mm, the above method had a limitation in providing an ultra-thin sheet having a thickness of 0.5 mm or less, and there was a problem in that an auxiliary substance such as fluff pulp is still required to secure shape retention and absorbency.

Accordingly, there is a need for research on a new type of super absorbent polymer, which does not require an auxiliary substance such as fluff pulp, can be reduced in thickness, and exhibits excellent absorption properties, and a preparation method of the same.

[Prior art Documents]

Patent Document 1: Japanese Patent Application Laid-Open No. Hei 08-73507
Patent Document 2: Japanese Patent Application Laid-Open No. Hei 09-183856

[DETAILED DESCRIPTION OF THE INVENTION]

[Technical Problem]

In order to solve the above problems, there are provided a film-type super absorbent polymer capable of replacing the existing powder-type super absorbent polymer, and a preparation method of the same.

[Technical Solution]

According to an embodiment of the present disclosure, there is provided a super absorbent polymer film including a polymer in which an acrylic acid-based monomer having at least partially neutralized acidic groups is polymerized, wherein a moisture content is 1% to 15% and a tensile strength is 5 MPa or more.

The super absorbent polymer film may have the tensile strength of 10 MPa to 50 MPa.

The super absorbent polymer film may have a thickness of 0.001 mm to 0.5 mm.

The super absorbent polymer film may have a centrifugal retention capacity (CRC) of 10 g/g or more when measured in accordance with EDANA WSP 241.2.

According to another embodiment of the present disclosure, there is provided a preparation method of the super absorbent polymer film. Specifically, the preparation method includes the steps of: preparing a monomer composition by mixing an acrylic acid-based monomer having at least partially neutralized acidic groups, a cellulose-based thickener, a moisturizing agent, an internal cross-linking agent, a polymerization initiator, and a solvent; casting the monomer composition on a substrate to form a monomer composition film; forming a hydrogel polymer film by irradiating heat and/or light while drawing the monomer composition film; and drying the hydrogel polymer film.

The cellulose-based thickener may be at least one selected from the group consisting of nanocellulose, hydroxyethylcellulose, hydroxypropylcellulose, hydroxyethylmethylcellulose, hydroxypropylmethylcellulose, and sodium carboxymethylcellulose.

The moisturizing agent may be at least one selected from the group consisting of glycerin; diglycerin; ethylene glycol; propylene glycol; butylene glycol; sorbitol; polyethylene glycol; polyglycerin-3; polyglycerin-6; polyglycerin-10; an ester compound of polyglycerol-10 and a C3 to C18 saturated fatty acid; citric acid; triethyl citrate; methyl citrate; sodium citrate; and trisodium 2-methylcitrate.

The cellulose-based thickener may be contained in an amount of 0.01 to 5 parts by weight based on 100 parts by weight of the solid content in the monomer composition.

The moisturizing agent may be contained in an amount of 5 to 70 parts by weight based on 100 parts by weight of the acrylic acid-based monomer.

The monomer composition may have a viscosity at 25 °C of 100 mPa·s or more.

The tension applied to the monomer composition film in the step of forming the hydrogel polymer film may be 40 to 100 N/m.

The monomer composition may further contain at least one clay selected from the group consisting of montmorillonite, saponite, nontronite, laponite, beidelite, hectorite, vermiculite, magadiite, kaolin, serpentine, and mica.

The clay may be contained in an amount of 0.1 to 5 parts by weight based on 100 parts by weight of the acrylic acid-based monomer.

A size of the clay may be 1 nm to 10 $\mu$m.

[ADVANTAGEOUS EFFECTS]

The super absorbent polymer film of the present disclosure exhibits excellent absorption performance while being thin, and has excellent tensile strength.

In addition, the super absorbent polymer film of the present disclosure can be manufactured into a product without scattering or leaking, and an auxiliary substance such as fluff pulp is unnecessary, so that it is possible to make products thinner and to reduce the manufacturing process and costs.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in detail.

According to an embodiment of the present disclosure, there is provided a super absorbent polymer film including a polymer in which an acrylic acid-based monomer having at least partially neutralized acidic groups is polymerized, wherein a moisture content is 1% to 15% and a tensile strength is 5 MPa or more.

In general, the super absorbent polymer is obtained by polymerizing an acrylic acid-based monomer in the presence of an internal cross-linking agent to obtain a hydrogel polymer, and then drying, pulverizing and classifying the hydrogel polymer to prepare a base resin, followed by performing surface modification. The super absorbent polymer prepared in this way is in the form of a powder having a particle size of about 200 to 600 μm, and is mixed and compounded with an auxiliary substance such as fluff pulp to be applied to the product.

However, the powder-type super absorbent polymer may scatter or leak from the product during the manufacturing process of an absorbent core, and it is difficult to uniformly disperse the polymer in the product, making it difficult to uniformly control absorption performance. In addition, it requires an auxiliary substance, so that there is a limitation in thinning the product.

In addition, it is known that the existing sheet-type super absorbent polymer is manufactured by rolling a powder- or particulate-type super absorbent polymer or fixing the super absorbent polymer to a support such as a non-woven fabric for shape retention. However, the sheet-type super absorbent polymer prepared in this method has low process efficiency due to a complicated manufacturing method, and requires a lot of components other than the super absorbent polymer to be fixed to the support. Therefore, there is a limitation in increasing the content of the super absorbent polymer present in the final product, and absorption property is not good. In addition, even when a powder- or particulate-type super absorbent polymer or a particulate-type hydrogel polymer is rolled to form a sheet, it is necessary to undergo a mixing process with a molding agent and a molding process after polymerization of the monomer. Thus, the manufacturing method is complicated and there is a limitation in thinning the product. Further, in order to bind the super absorbent polymer and form a sheet, it is necessary to include a molding auxiliary substance such as fiber or pulp, so that the absorption property is also poor.

Accordingly, the present inventors have conducted a research on a new type of super absorbent polymer that does not require an auxiliary substance such as pulp, can be thinned, does not scatter, and can be used as an absorber by itself, resulting in the present invention.

The super absorbent polymer film of the present disclosure is in the form of a thin film rather than a powder, so there is no risk of scattering or leaking from the product during handling, and can be used without a separate auxiliary substance such as fluff pulp, and exhibits excellent absorption properties by itself.

In the present disclosure, the super absorbent polymer film refers to a super absorbent polymer in the form of a flexible and thin layer or film having a moisture content of 15% or less, or 12% or less, preferably 11% or less. Preferably, the moisture content of the super absorbent polymer film is 15 wt% or less, 12 wt% or less, 11 wt% or less, or 10 wt% or less, and 1 wt% or more, 2 wt% or more, 4 wt% or more, or 6 wt% or more.

Meanwhile, the "moisture content" in the present disclosure indicates the amount of moisture contained in the sample as a percentage with respect to the weight of the sample before drying. That is, the moisture content can be calculated by dividing a value obtained by subtracting the weight after drying of the sample from the weight before drying of the sample by the weight before drying of the sample, and then multiplying by 100%. At this time, the drying condition for measuring the moisture content is that the temperature is increased to about 150 °C and maintained at 150 °C, and the total drying time is 20 min including 5 min of a heating step.

In one embodiment, the super absorbent polymer film may have a moisture content of 15% or less, and may be in the form of a colorless, transparent, elastic, and flexible film.

Specifically, when the thickness of the super absorbent polymer film satisfies the range of 0.001 to 0.5 mm, a total light transmittance with respect to visible light is 85.0% or more, indicating transparency. The total light transmittance of the super absorbent polymer film according to the embodiment of the present disclosure may be 87.5% or more, 89.5% or more, 90% or more, 90.3% or more, 91% or more, 91.5% or more, or 92% or more. The total light transmittance may be theoretically 100%, for example, it may be 99% or less.

In addition, the super absorbent polymer film of the present disclosure may have a yellow index of 2.6 or less, 2.5 or less, 2.4 or less, 2.3 or less, 1.9 or less, 1.5 or less, or 1.3 or less, when measured in accordance with ASTM D1925 with a thickness of 0.001 to 0.5 mm.

The super absorbent polymer film according to an embodiment of the present disclosure is characterized in that the moisture content is in the range of 1% to 15%, and the tensile strength is 5 MPa or more.

Preferably, when the moisture content is 5 to 15%, the tensile strength of the super absorbent polymer film may be 10 MPa or more, 11 MPa or more, 13 MPa or more, 14 MPa or more, 19 MPa or more, or 22 MPa or more, and 50 MPa or less, 47 MPa or less, 45 MPa or less, 40 MPa or less, or 35 MPa or less.

Alternatively, the super absorbent polymer film has the moisture content of 7% to 12%, and the tensile strength of 10 MPa or more, 11 MPa or more, 13 MPa or more, 14 MPa or more, 19 MPa or more, or 22 MPa or more, and 50 MPa or less, 47 MPa or less, 45 MPa or less, 40 MPa or less, or 35 MPa or less.

As described above, the super absorbent polymer film of the present disclosure exhibits significantly higher tensile strength than the super absorbent polymer having the same moisture content. With this property, the super absorbent polymer film of the present disclosure can be suitably used not only for diapers, but also for waterproofing and reinforcing materials such as electric wires and cables and products requiring mechanical strength such as flame retardants.

The super absorbent polymer film of the present disclosure has a thickness of 0.5 mm or less, which can provide a thinner absorbent than existing powder-type super absorbent polymers. Preferably, the thickness of the super absorbent polymer film is 0.5 mm or less, 0.4 mm or less, 0.3 mm or less, 0.2 mm or less, or 0.1 mm or less, and 0.001 mm or more, 0.005 mm or more, 0.01 mm or more, or 0.05 mm or more, but is not limited thereto.

The super absorbent polymer film has a centrifugal retention capacity (CRC) of 10 g/g or more, 13 g/g or more, 20 g/g or more, 22 g/g or more, 25 g/g or more, 28 g/g or more, or 33 g/g or more, when measured in accordance with EDANA WSP 241.2, indicating excellent absorption properties. The higher centrifugal retention capacity can be evaluated as the better, and there is no theoretical upper limit, but may be, for example, 50 g/g or less, or 48 g/g or less.

In addition, the super absorbent polymer film according to an embodiment of the present disclosure exhibits excellent absorbency under pressure due to excellent strength. For example, the super absorbent polymer film satisfies the absorbency under pressure (AUP) at 0.7 psi of 10 g/g or more, 12 g/g or more, or 12.5 g/g or more, when measured in accordance with EDANA WSP 242.2. The higher absorbency under pressure can be evaluated as the better, and there is no theoretical upper limit, but may be, for example, 25 g/g or less, or 20 g/g or less.

In addition, the super absorbent polymer film may have extractable contents of 30 wt% or less, 20 wt% or less, 15 wt% or less, or 13 wt% or less, and 1 wt% or more, or 3 wt% or more, when measured in accordance with EDANA WSP 270.2.

A method for measuring the centrifugal retention capacity, absorbency under pressure, and extractable contents of the super absorbent polymer film may be specified in Examples to be described later.

The super absorbent polymer film may include a polymer in which an acrylic acid-based monomer having at least partially neutralized acidic groups is polymerized in the presence of a cellulose-based thickener and a moisturizing agent.

Alternatively, the super absorbent polymer film may include a polymer in which an acrylic acid-based monomer having at least partially neutralized acidic groups is polymerized in the presence of a cellulose-based thickener, a moisturizing agent, and clay. The super absorbent polymer film prepared in the presence of clay may exhibit improved tensile strength and absorbency under pressure. The clay that can be used in the preparation of the super absorbent polymer film will be described later.

As such, the super absorbent polymer film of the present disclosure has excellent basic absorption performance, high mechanical strength, and excellent flexibility, and thus can be used for various purposes such as waterproofing and reinforcing materials for diapers, wires and cables, electrolyte absorbers, flame retardants, wound protection agents, fresh-keeping agents for food, water retaining soil products, etc.

Meanwhile, the shape of the super absorbent polymer film is not particularly limited. For example, the super absorbent polymer film may be in the form of a flat film having a constant thickness without irregularities on the surface, or may have a pattern formed on the surface to improve flowability of the liquid. In this case, the shape of the pattern is not particularly limited, and the pattern may be formed by variously adjusting the length, width, depth, etc. of the recess and convex portions, if necessary.

Meanwhile, according to another embodiment of the present disclosure, there is provided a preparation method of the super absorbent polymer film.

Specifically, the super absorbent polymer film may be prepared by a preparation method including the steps of:

preparing a monomer composition by mixing an acrylic acid-based monomer having at least partially neutralized acidic groups, a cellulose-based thickener, a moisturizing agent, an internal cross-linking agent, a polymerization initiator, and a solvent;
casting the monomer composition on a substrate to form a monomer composition film;
forming a hydrogel polymer film by irradiating heat and/or light while drawing the monomer composition film; and
drying the hydrogel polymer film.

In the present disclosure, a monomer composition film is prepared from a monomer composition solution having a controlled viscosity by a solution casting method, and the film is polymerized and dried to prepare a super absorbent polymer in the form of a film.

In particular, in the present disclosure, physical properties such as absorbency, flexibility, and strength of the super absorbent polymer film can be adjusted by applying tension to the monomer composition film in the polymerization step, followed by drawing.

In the preparation method of the present disclosure, the monomer composition, which is a raw material of the super absorbent polymer, contains an acrylic acid-based monomer having at least partially neutralized acidic groups, a cellulose-based thickener, a moisturizing agent, a polymerization initiator, and a solvent.

First, the acrylic acid-based monomer is a compound represented by the following Chemical Formula 1:

[Chemical Formula 1]     $R^1$-COOM$^1$

in Chemical Formula 1,

$R^1$ is a C2 to C5 alkyl group having an unsaturated bond, and
$M^1$ is a hydrogen atom, a monovalent or divalent metal, an ammonium group, or an organic amine salt.

Preferably, the acrylic acid-based monomer includes at least one selected from the group consisting of acrylic acid, methacrylic acid, and a monovalent metal salt, a divalent metal salt, an ammonium salt, and an organic amine salt thereof.

Herein, the acrylic acid-based monomers may be those having acidic groups which are at least partially neutralized. Preferably, the acrylic acid-based monomer partially neutralized with an alkali substance such as sodium hydroxide, potassium hydroxide, ammonium hydroxide, or the like may be used. A degree of neutralization of the acrylic acid-based monomer may be 40 to 95 mol%, 40 to 80 mol%, or 45 to 75 mol%. The range of the degree of neutralization can be adjusted according to final properties. An excessively high degree of neutralization causes the neutralized monomers to be precipitated, and thus polymerization may not readily occur, whereas an excessively low degree of neutralization may deteriorate the absorbency of the polymer.

In a preferred embodiment, sodium hydroxide (NaOH), potassium hydroxide (KOH), or a combination thereof may be used as the alkali substance. In particular, potassium hydroxide is preferable to prepare a super absorbent polymer film having better flexibility and dimensional stability.

The concentration of the acrylic acid-based monomer may be about 20 to about 60 wt%, preferably about 40 to about 50 wt%, based on the monomer composition including the raw materials of the super absorbent polymer and the solvent, and it may be appropriately selected in consideration of the reaction time and the reaction conditions. However, when the concentration of the monomer is excessively low, the yield of the super absorbent polymer is low and there may be a problem in economic efficiency. In contrast, when the concentration is excessively high, a problem may occur in the process such as some of the monomer is precipitated, and thus physical properties of the super absorbent polymer may be deteriorated.

Meanwhile, in the present disclosure, a thickener and a moisturizing agent are contained in the monomer composition so that the monomer composition can be applied in the form of a film by a solution casting method.

As the thickener and the moisturizing agent are contained at the same time, the monomer composition of the present disclosure may exhibit a viscosity suitable for casting in the form of a film, can maintain an appropriate moisture content in the polymerization process after film casting, and the super absorbent polymer film to be prepared may have high flexibility.

In the present disclosure, a cellulose-based thickener is used as the thickener, and specifically, at least one selected from the group consisting of nanocellulose, hydroxyethylcellulose, hydroxypropylcellulose, hydroxyethylmethylcellulose, hydroxypropylmethylcellulose, and carboxymethylcellulose may be used. Preferably, nanocellulose, hydroxyethylcellulose, sodium carboxymethylcellulose, or a combination thereof may be used.

The cellulose-based thickener may be contained in an amount of 0.01 parts by weight or more, 0.1 parts by weight or more, 0.2 parts by weight or more, or 0.35 parts by weight or more, and 5 parts by weight or less, 3 parts by weight or less, 1 parts by weight or less, or 0.9 parts by weight or less based on 100 parts by weight of the solid content in the monomer composition.

Herein, the solid content in the monomer composition means all components of the composition excluding the solvent. That is, the solid content means the total content of an acrylic acid-based monomer, an alkali substance for neutralizing the acrylic acid-based monomer, a cellulose-based thickener, a moisturizing agent, a cross-linking agent, a thermal initiator, a photoinitiator, an internal cross-linking agent, and other additives (e.g., clay, surfactant, etc.).

If the content of the cellulose-based thickener is less than 0.01 parts by weight based on 100 parts by weight of the solid content in the monomer composition, sufficient thickening effect cannot be ensured, so it may be difficult to prepare a monomer composition film. Conversely, if it exceeds 5 parts by weight, the viscosity of the monomer composition becomes excessively high, so that the thickness of the film becomes thick, and it may be difficult to uniformly control the thickness of the film.

As the moisturizing agent, a substance normally used as a moisturizing component in pharmaceuticals, cosmetics, chemical products, and the like may be used without limitation. Examples of the moisturizing agent include at least one selected from the group consisting of polyhydric alcohols having two or more hydroxyl groups in a molecule, citric acid, and citrate.

Specifically, as the polyhydric alcohol, a C3 to C30 polyhydric alcohol having 3 to 12 hydroxyl groups in a molecule may be used. For example, the polyhydric alcohol may be at least one selected from the group consisting of glycerin; diglycerin; ethylene glycol; propylene glycol; butylene glycol; sorbitol; polyethylene glycol; polyglycerin-3; polyglycerin-6; polyglycerin-10; and an ester compound of polyglycerin-10 and a C3 to C18 saturated fatty acid (e.g.,

polyglyceryl-10 distearate, polyglyceryl-10 oleate, polyglyceryl-10 laurate, etc.). Among them, at least one selected from the group consisting of glycerin, diglycerin, propylene glycol, and sorbitol may be preferably used.

In addition, citric acid and/or citrate may also be used as the moisturizing agent. Examples of the citrate include triethylcitrate, methylcitrate, sodium citrate, trisodium 2-methylcitrate, and the like.

The moisturizing agent may be used in an amount of 5 parts by weight or more, 10 parts by weight or more, 20 parts by weight or more, or 30 parts by weight or more, and 70 parts by weight or less, 60 parts by weight or less, or 50 parts by weight or less based on 100 parts by weight of the acrylic acid-based monomer.

If the content of the moisturizing agent is less than 5 parts by weight based on 100 parts by weight of the acrylic acid-based monomer, the moisture content of the monomer composition film is not sufficient, so that the film may dry out or crumble in the subsequent polymerization and drying process and flexibility of the super absorbent polymer film to be prepared cannot be achieved. Conversely, if the content of the polyhydric alcohol exceeds 70 parts by weight based on 100 parts by weight of the acrylic acid-based monomer, there may be a problem in that absorbency of the super absorbent polymer film is reduced. Therefore, the content of the moisturizing agent preferably satisfies the above range.

The monomer composition contains an internal cross-linking agent for cross-linking the polymer. As the internal cross-linking agent, those used in the manufacture of existing super absorbent polymers may be used. The internal cross-linking agent may be a cross-linking agent having one or more ethylene-based unsaturated groups in addition to one or more functional groups which may react with a water-soluble substituent of the acrylic acid-based monomer; or a cross-linking agent having two or more functional groups which may react with a water-soluble substituent of the monomer and/or a water-soluble substituent formed by hydrolysis of the monomer.

As the specific example of the internal cross-linking agent, a C8-C12 bisacrylamide, bismethacrylamide, a poly(meth)acrylate of C2-C10 polyol, a poly(meth)allylether of C2-C10 polyol, or the like may be used. More specifically, at least one selected from the group consisting of N,N'-methylenebis(meth)acrylate, ethyleneoxy(meth)acrylate, polyethyleneoxy(meth)acrylate, propyleneoxy(meth)acrylate, glycerin diacylate, glycerin triacrylate, trimethylol triacrylate, polyethylene glycol diacrylate, triallylamine, triaryl cyanurate, triallyl isocyanate, polyethylene glycol, diethylene glycol and propylene glycol may be used. In one embodiment, polyethylene glycol diacrylate may be used as the internal cross-linking agent.

This internal cross-linking agent may be contained in a concentration of 5000 ppm or less with respect to the monomer composition, so that the polymerized polymer can be cross-linked. In one embodiment, the internal cross-linking agent may be contained in 100 ppm or more, 250 ppm or more, or 500 ppm or more, and 5000 ppm or less, 4500 ppm or less, or 4000 ppm or less. The content of the internal cross-linking agent may be appropriately adjusted depending on the thickness of the super absorbent polymer film and the range of the desired tensile strength.

The polymerization initiator used in the preparation method of the super absorbent polymer film is not particularly limited as long as it is generally used for the preparation of a super absorbent polymer.

Specifically, the polymerization initiator may be an initiator for thermal polymerization or an initiator for photopolymerization by UV radiation according to the polymerization method. However, even when the photopolymerization method is applied thereto, a certain amount of heat is generated by UV radiation and the like, and some heat occurs as the polymerization reaction, an exothermal reaction, progresses. Therefore, the composition may additionally include the thermal polymerization initiator. In a preferred embodiment, a photopolymerization initiator and a thermal polymerization initiator may be used simultaneously as the polymerization initiator.

Herein, any compound which can form a radical by light such as UV rays may be used as the photopolymerization initiator without limitation.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone. Further, as the specific example of acyl phosphine, commercial lucirin TPO(2,4,6-Trimethylbenzoyldiphenylphosphine oxide), Irgacure 819(Phenylbis(2,4,6-trimethylbenzoyl)phosphine oxide), and the like may be used. More various photopolymerization initiators are well disclosed in "UV Coatings: Basics, Recent Developments and New Application (Elsevier, 2007)" written by Reinhold Schwalm, p115, and the present disclosure is not limited thereto.

A concentration of the photopolymerization initiator in the monomer composition may be 10 ppm or more, 20 ppm or more, or 40 ppm or more, and 2000 ppm or less, 1000 ppm or less, 500 ppm or less, or 100 ppm or less. If the concentration of the photopolymerization initiator is excessively low, the polymerization rate may become slow, and if the concentration is excessively high, the molecular weight of the super absorbent polymer may become low and properties may be uneven.

Furthermore, as the thermal polymerization initiator, one or more initiators selected from the group consisting of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate (($NH_4$)$_2S_2O_8$), and the like may be used as examples of the persulfate-based initiators; and 2,2-azobis(2-amidinopropane)dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of azo-based initiators. More various thermal polymerization initiators are well disclosed in "Principle of Polymerization (Wiley, 1981)" written by Odian, p 203, and the present disclosure is not limited thereto.

A concentration of the thermal polymerization initiator in the monomer composition may be 10 ppm or more, 100 ppm or more, or 500 ppm or more, and 2000 ppm or less, 1500 ppm or less, or 1000 ppm or less. If the concentration of the thermal polymerization initiator is excessively low, additional thermal polymerization hardly occurs and the effect of adding the thermal polymerization initiator may be insufficient. If the concentration of the thermal polymerization initiator is excessively high, the molecular weight of the super absorbent polymer may become low and the properties may be uneven.

In the preparation method of the present disclosure, the monomer composition may further contain a plasticizer, a preservation stabilizer, an antioxidant, or the like, if necessary.

Meanwhile, the monomer composition of the present disclosure may further contain clay as an additive in order to further improve strength of the super absorbent polymer film and to improve absorption properties. In addition, the clay may prevent aggregation of the monomer composition, thereby further improving dispersibility of raw materials.

The clay acts as a kind of filler, which provides a space between polymers to improve strength of the super absorbent polymer film, and may function to improve absorbency under pressure (AUP). That is, the clay has cations such as $Na^+$, and $Ca^{2+}$ on the surface, so that it can provide space between polymer chains due to ionic repulsion between particles and attract water to further improve absorbency of the super absorbent polymer film.

Accordingly, the super absorbent polymer film prepared containing the clay may exhibit superior absorption properties even when an external impact is applied, and can retain its shape without being torn. Therefore, the super absorbent polymer film may be more suitable for diapers, wallpaper with moisture absorption and desorption, food storage bags, etc., which require excellent absorbency and durability.

The clay may be contained in an amount of 0.1 parts by weight or more, 0.5 parts by weight or more, 0.7 parts by weight or more, or 1 parts by weight or more, and 5 parts by weight or less, 4 parts by weight or less, 3 parts by weight or less, or 2.5 parts by weight or less based on 100 parts by weight of the acrylic acid-based monomer.

If the content of the clay is less than 0.1 parts by weight based on 100 parts by weight of the acrylic acid-based monomer, the effect of improving strength of the super absorbent polymer film cannot be obtained. If it exceeds 5 parts by weight, it is difficult for the clay to be uniformly dispersed in the monomer composition, and precipitation may occur, which may adversely affect polymerization.

The size of the clay may preferably be 10 $\mu$m or less. Specifically, the size of the clay may be 1 nm or more, 10 nm or more, or 20 nm or more, and 10 $\mu$m or less, 5 $\mu$m or less, or 1 $\mu$m or less. If the size of the clay is less than 1 nm, the effect of improving physical properties of the super absorbent polymer film may be insignificant, and if it exceeds 10 $\mu$m, dispersibility may be deteriorated when added to the monomer composition. The size of the clay means the size of each clay particle, and may be measured with a scanning electron microscope, or the like.

Preferably, a granular shape of the clay may be a plate shape. If the clay is plate-shaped, the number of effective cations exposed on the surface of the clay is greater than that of amorphous clay, and thus the effect of improving absorbency can be further improved.

Specifically, the clay may be a plate-shaped clay having an aspect ratio of each particle (ratio of particle size/thickness) of 2 or more, 10 or more, 20 or more, or 25 or more. The aspect ratio of the clay may be, for example, 10,000 or less, or 5,000 or less.

In addition, the clay may preferably have a bulk density of 300 to 1200 $kg/m^3$ in order to improve dispersibility.

Specifically, the bulk density of the clay may be 300 $kg/m^3$ or more, 400 $kg/m^3$ or more, or 500 $kg/m^3$ or more, and 1200 $kg/m^3$ or less, 1100 $kg/m^3$ or less, or 1000 $kg/m^3$ or less. If the size of the clay is less than 300 $kg/m^3$, the effect of improving physical properties of the super absorbent polymer film may be insignificant, and if it exceeds 1200 $kg/m^3$, dispersibility may be deteriorated when added to the monomer composition.

The clay may be at least one selected from the group consisting of montmorillonite, saponite, nontronite, laponite, beidelite, hectorite, vermiculite, magadiite, kaolin, serpentine, and mica. When the monomer composition is an aqueous solution, it may be more preferable to use at least one selected from the group consisting of montmorillonite and/or laponite in terms of improving dispersibility of the composition. Examples of commercially available clays include Optigel® CK (manufactured by BYK) and Laponite® RD (manufactured by BYK).

In addition, the monomer composition may further contain a surfactant in order to further improve coating properties during casting on a substrate.

As the surfactant, a polyether-modified siloxane-based surfactant having a polyether chain at the terminal and/or side chain of polysiloxane main chain may be used. For example, the polyether-modified siloxane-based surfactant may have a polyethylene oxide group and/or a polypropylene oxide group. When such a polyether-modified siloxane-based surfactant is used, a more uniform film can be formed during coating (application) of the monomer composition on the substrate, and thus it may be more suitable for high-speed production by a continuous process such as a roll-to-roll process.

As the polyether-modified siloxane-based surfactant, a commercially available material may be used. For example, at least one selected from the group consisting of BYK-345, BYK-346, BYK-347, BYK-348, BYK-349, BYK-3450, BYK-3455, BYK-3456, BYK-3560, BYK-3565, and BYK-3760 may be used.

The content of the polyether-modified siloxane-based surfactant may be 0.05 to 0.5 parts by weight, or 0.1 parts by weight or more, 0.15 parts by weight or more, or 0.2 parts by weight or more, and 0.45 parts by weight or less, 0.4 parts by weight or less, or 0.35 parts by weight or less, based on 100 parts by weight of the monomer composition.

If the content of the surfactant is less than 0.05 parts by weight based on 100 parts by weight of the monomer composition, the effect of improving coating properties of the above-described monomer composition cannot be achieved. If it exceeds 0.5 parts by weight, basic absorption properties (initial absorbency, absorbency at atmospheric pressure, etc.) of the super absorbent polymer film to be prepared may be deteriorated. Therefore, it is preferable to include the surfactant in the above-mentioned range so as not to deteriorate overall physical properties of the super absorbent polymer film to be finally prepared while exhibiting excellent coating properties to be suitable for a roll-to-roll process, and the like.

The raw materials such as the acrylic acid-based monomer, the cellulose-based thickener, the moisturizing agent, the internal cross-linking agent, the polymerization initiator, and the additive may be prepared in the form of a monomer composition solution dissolved in a solvent.

Any solvent which can dissolve the components may be used without limitation, and for example, one or more solvents selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, N,N-dimethylacetamide, and the like may be used alone or in combination. For example, water may be used as the solvent.

In the present disclosure, the monomer composition exhibits a viscosity suitable for a solution casting method by containing a cellulose-based thickener and a moisturizing agent. Specifically, the viscosity at 25 °C of the monomer composition may be 100 mPa·s or more, 140 mPa·s or more, or 200 mPa·s or more, and 5000 mPa·s or less, 2300 mPa·s or less, 2000 mPa·s or less, 1500 mPa·s or less, or 1400 mPa·s or less. The viscosity of the monomer composition may be measured with a viscometer (e.g., TV-22 manufactured by TOKI) under the conditions of spindle #1 and a rotational speed of 1 rpm.

If the viscosity of the monomer composition is less than 100 mPa·s, it may be difficult to cast the monomer composition to a uniform thickness, and polymerize it while drawing it. Conversely, if the viscosity of the monomer composition exceeds 5000 mPa·s, it is difficult to prepare a uniform monomer composition, and flowability of the monomer composition is low, so that processability is deteriorated and defoaming is difficult.

The monomer composition is prepared, and then casted on a substrate to prepare a monomer composition film. Then, it is polymerized while drawing it to form a hydrogel polymer film. Casting and polymerization of the monomer composition may be continuously performed through a roll-to-roll process. In particular, when the monomer composition contains a polyether-modified siloxane-based surfactant, it may be applied to a substrate in a uniform thickness, and thus may be more suitable for a continuous roll-to-roll process.

The material of the substrate is not particularly limited, but it is preferable to use a material in which the monomer composition is easily applied and the hydrogel polymer film is easily separated after polymerization.

Specifically, a polyethylene terephthalate (PET) film in which at least one surface is hydrophobically treated with silicone or fluorine, which is usually used as a release film, may be used as the substrate. For example, the substrate may be a PET film surface-treated with a siloxane-based polymer or polytetrafluoroethylene (Teflon®). However, the material of the substrate is not limited thereto, and a suitable substrate may be selected depending on the composition and properties of the monomer composition.

Unlike the general polymer solution casting method in which the solvent is removed after casting the polymer solution, the present disclosure immediately performs the drawing and polymerization process after the monomer composition is applied on the substrate so as not to decrease the moisture content.

If the moisture content of the monomer composition film is too low, components constituting the monomer composition may be precipitated before polymerization, and there may be a problem in that the film is broken after polymerization. Accordingly, the moisture content of the monomer composition film preferably satisfies the range of 30 wt% to 60 wt%, 30 wt% to 50 wt%, or 30 wt% to 45 wt%.

The thickness of the monomer composition film may be appropriately adjusted depending on the thickness of the desired super absorbent polymer film. Although the thickness of the monomer composition film hardly changes during the polymerization step, the thickness may decrease by about 10 to 40% or 15 to 35% while the moisture content decreases during the drying process of the hydrogel polymer film after polymerization. In consideration of this, a monomer composition film may be prepared with an appropriate thickness.

For an example, the thickness of the monomer composition film may be 0.8 mm or less, 0.6 mm or less, or 0.5 mm or less, and 0.001 mm or more, or 0.01 mm or more, but is not limited thereto. It can be appropriately adjusted depending on the composition of the monomer composition, specific conditions in the polymerization and drying steps, and the thickness of the desired super absorbent polymer film.

Subsequently, a polymerization reaction is performed by irradiating heat and/or light while drawing the monomer composition film in the longitudinal direction (MD direction) to form a hydrogel polymer film. Drawing the film during polymerization as described above can control mechanical properties such as strength and flexibility of the super absorbent polymer film to be prepared.

At this time, the tension applied to the monomer composition film may be 40 N/m or more, 45 N/m or more, 50 N/m or more, or 60 N/m or more, and 100 N/m or less, 90 N/m or less, or 80 N/m or less. If the film is drawn by applying an excessively large tension, the monomer composition film may be broken or the thickness may be excessively thin, and if the tension is too small, physical properties such as strength and flexibility of the film may not be achieved.

The polymerization temperature may be appropriately adjusted depending on the composition of the monomer composition, but is preferably 40 °C or more, or 50 °C or more for the smooth reaction. In addition, if the temperature is too high, the solvent evaporates and components constituting the monomer composition may be precipitated. Therefore, the polymerization temperature is preferably 90 °C or less or 80 °C or less.

The moisture content of the hydrogel polymer film prepared through the polymerization step may be about 20 wt% or more, preferably 25 wt% or more, and 40 wt% or less, or 35 wt% or less. Accordingly, the hydrogel polymer film is dried to prepare a final super absorbent polymer film.

The temperature of the drying step may be preferably 80 to 150 °C, or 90 to 100 °C. Drying for about 5 to 30 minutes within the above temperature range may provide a super absorbent polymer film having the moisture content of 15 wt% or less, 12 wt% or less, or 11 wt% or less, and 1 wt% or more, 2 wt% or more, 4 wt% or more, or 6 wt% or more.

As described above, the super absorbent polymer film prepared according to the preparation method has a tensile strength of 5 MPa or more with the moisture content of 5% to 15%, and thus has excellent mechanical properties as well as basic absorption properties. Since the super absorbent polymer film of the present disclosure is thin and can be used as an absorbent by itself without compounding with an auxiliary substance such as pulp, it can be suitably used for slim and thin-film products, and can be usefully used in products requiring mechanical strength.

Hereinafter, the present invention will be described in more detail with the following preferred examples, but these examples are provided for illustrative purposes only. It is apparent to those skilled in the art that various changes and modifications can be made within the scope and spirit of the present invention. Therefore, it is obvious that the changes and modifications are within the scope of the present invention.

[Examples]

## Example 1

A neutralized solution in which 70 mol% of acrylic acid was neutralized was prepared by mixing 55 g of acrylic acid, 66.6 g of a 45 wt% potassium hydroxide (KOH) solution, and 55 g of water.

Hydroxyethyl cellulose (HEC, Natrosol 250HR manufactured by Ashland) as a thickener, glycerin as a moisturizing agent, polyethylene glycol diacrylate (PEGDA, MW=400, manufacturer: Aldrich) as an internal cross-linking agent, sodium persulfate as a thermal polymerization initiator, and Irgacure 819 as a photopolymerization initiator were added to the neutralized solution to prepare a monomer composition having a solid content of 54 wt%.

At this time, HEC was added in an amount of 0.35 parts by weight based on 100 parts by weight of the solid content in the monomer composition, glycerin was added in an amount of 40 parts by weight based on 100 parts by weight of acrylic acid, and PEGDA, the thermal polymerization initiator and the photopolymerization initiator were added in an amount of 500 ppm, 1000 ppm and 80 ppm based on the total weight of the monomer composition, respectively.

A viscosity of the prepared monomer composition at 25 °C was measured using TV-22 manufactured by TOKI under the conditions of 1 rpm and Rotor #1. As a result, the viscosity of the monomer composition was confirmed to be 144 mPa·s.

Subsequently, the monomer composition was coated on one surface of a polyethylene terephthalate (PET) release film (Mitsubishi MRL film) whose surface was hydrophobically treated with a siloxane-based polymer to form a 0.1 mm thick monomer composition film (moisture content of 30%). A comma coater (Gap 365 $\mu$m) was used for coating, and an applicator roll moved at 0.5 m/min.

Then, polymerization was performed by irradiating UV light of 370 mJ/cm$^2$ to the monomer composition film to form a hydrogel polymer film. Herein, a polymerization reaction was performed while drawing the monomer composition film with tension of 60 N/m in the MD direction. The thickness of the prepared hydrogel polymer film was 0.1 mm, and it was confirmed that there was no significant change compared to the monomer composition and the moisture content was 30 wt%.

Subsequently, the prepared hydrogel polymer film was dried at a temperature of 90 °C for 10 minutes to prepare a super absorbent polymer film (SAP film) having a moisture content of 9.93 wt% and a thickness of 0.091 mm.

### Examples 2 to 7

Super absorbent polymer films of Examples 2 to 7 were prepared in the same manner as in Example 1, except that the composition of the monomer composition and the thickness of the monomer composition film were changed as shown in Table 1 below.

### Example 8

A monomer composition was prepared in the same manner as in Example 1, except that sodium carboxymethyl cellulose (CMC, average weight average molecular weight: 250,000, degree of substitution: 0.7) was used in an amount of 0.68 parts by weight based on 100 parts by weight of the solid content in the monomer composition instead of HEC as a thickener, and 2000 ppm of PEGDA based on the total weight of the monomer composition was used.

The monomer composition was coated on one surface of a polyethylene terephthalate (PET) release film whose surface was hydrophobically treated with a siloxane-based polymer to a thickness of 0.2 mm to form a monomer composition film. Then, the monomer composition film was polymerized by irradiating UV light of 370 mJ/cm$^2$ to form a hydrogel polymer film. Herein, a polymerization reaction was performed while drawing the monomer composition film with tension of 60 N/m in the MD direction.

Subsequently, the prepared hydrogel polymer film was dried at a temperature of 110 °C for 15 minutes to prepare a super absorbent polymer film.

### Example 9

A monomer composition was prepared in the same manner as in Example 5, except that propylene glycol was used instead of glycerin as a moisturizing agent.

The monomer composition was coated on one surface of a polyethylene terephthalate (PET) release film whose surface was hydrophobically treated with a siloxane-based polymer to a thickness of 0.2 mm to form a monomer composition film. Then, the monomer composition film was polymerized by irradiating UV light of 370 mJ/cm$^2$ to form a hydrogel polymer film. Herein, a polymerization reaction was performed while drawing the monomer composition film with tension of 60 N/m in the MD direction.

Subsequently, the prepared hydrogel polymer film was dried at a temperature of 110 °C for 15 minutes to prepare a super absorbent polymer film.

### Example 10

A super absorbent polymer film was prepared in the same manner as in Example 5, except that 1000 ppm of PEGDA based on the total weight of the monomer composition was used, and the drawing tension applied to the monomer composition film during polymerization was 80 N/m.

### Example 11

A neutralized solution in which 70 mol% of acrylic acid was neutralized was prepared by mixing 55 g of acrylic acid, 66.6 g of a 45 wt% potassium hydroxide (KOH) solution, and 55 g of water.

Hydroxyethyl cellulose (HEC, Natrosol 250HR manufactured by Ashland) as a thickener, glycerin as a moisturizing agent, sodium persulfate as a thermal polymerization initiator, Irgacure 819 as a photopolymerization initiator, polyethylene glycol diacrylate (PEGDA, MW=400, manufacturer: Aldrich) as an internal cross-linking agent, and a polyether-modified siloxane-based surfactant (BYK-349) were added to the neutralized solution to prepare a monomer composition having a solid content (TSC) of 54 wt%.

At this time, HEC was added in an amount of 0.45 parts by weight based on 100 parts by weight of the solid content in the monomer composition, and glycerin was added in an amount of 40 parts by weight based on 100 parts by weight of acrylic acid. In addition, the thermal polymerization initiator, the photopolymerization initiator, the internal cross-linking agent, and the surfactant were added in an amount of 1000 ppm, 80 ppm, 1000 ppm and 0.2 wt% based on the total weight of the monomer composition, respectively.

The monomer composition was coated on one surface of a polyethylene terephthalate (PET) release film whose surface was hydrophobically treated with a siloxane-based polymer to a thickness of 0.2 mm to form a monomer composition film. Then, the monomer composition film was polymerized by irradiating UV light of 370 mJ/cm$^2$ to form a hydrogel polymer film. Herein, a polymerization reaction was performed while drawing the monomer composition film with tension of 60 N/m in the MD direction.

Subsequently, the prepared hydrogel polymer film was dried at a temperature of 90 °C for 10 minutes to prepare a super absorbent polymer film.

**Example 12**

A super absorbent polymer film was prepared in the same manner as in Example 11, except that the monomer composition further contains Laponite RD (manufactured by BYK, size 25 nm, particle aspect ratio 25, bulk density 1000 kg/m$^3$) as clay. The clay was used in an amount of 1 parts by weight based on 100 parts by weight of acrylic acid.

**Example 13**

A super absorbent polymer film was prepared in the same manner as in Example 12, except that Optigel-CK (manufactured by BYK, size 1-5 μm, particle aspect ratio 1000-5000, bulk density 550-750 kg/m$^3$) was used in an amount of 1 parts by weight based on 100 parts by weight of acrylic acid instead of Laponite RD as clay.

**Comparative Example 1**

Referring to Example 1 of Japanese Patent Application No. 1995-154195 (Japanese Patent Application Laid-Open No. Hei 08-73507), a sheet-type super absorbent polymer was prepared by the following method.

A monomer composition containing 36 g of acrylic acid, 37.3 g of triethanolamine, 0.08 g of trimethylolpropane triacrylate, 18.3 g of deionized water, 0.1 g of potassium persulfate, 0.0025 g of L-ascorbic acid (oxidation/reduction initiator), and 0.92 g of hydroxyethyl cellulose (acrylic acid triethanolamine salt and acrylic acid account for about 75 wt% and 25 wt% of all monomers, respectively, and a monomer concentration of the monomer composition is about 80 wt%) was prepared. This monomer composition was sandwiched between two Teflon sheets and subjected to thermal polymerization in a hot air dryer at 80 °C with a clearance of 0.5 mm to obtain a sheet-type super absorbent polymer having a thickness of 0.221 mm. The moisture content of the prepared super absorbent polymer was found to be 8.91 wt%, and a separate drying process was not performed after the polymerization.

**Comparative Example 2**

The same monomer composition as in Comparative Example 1 was sandwiched between two Teflon sheets and subjected to thermal polymerization in a hot air dryer at 80 °C with a clearance of 0.5 mm to obtain a sheet-type super absorbent polymer having a thickness of 0.288 mm. The moisture content of the prepared super absorbent polymer was found to be 9.21 wt%, and a separate drying process was not performed after the polymerization.

**Comparative Example 3**

Referring to Example 2 of Japanese Patent Application No. 1995-154195 (Japanese Patent Application Laid-Open No. Hei 08-73507), a sheet-type super absorbent polymer was prepared by the following method.

A monomer composition containing 36 g of acrylic acid, 29.8 g of triethanolamine, 2.8 g of potassium hydroxide, 0.021 g of trimethylolpropane triacrylate, 17.2 g of deionized water, 0.1 g of potassium persulfate, 0.0025 g of L-ascorbic acid, and 0.85 g of hydroxyethyl cellulose was prepared. This monomer composition was sandwiched between two Teflon sheets and subjected to thermal polymerization in a hot air dryer at 80 °C under the condition of a clearance of 0.5 mm to obtain a sheet-type super absorbent polymer having a thickness of 0.232 mm. The moisture content of the prepared super absorbent polymer was found to be 7.57 wt%, and a separate drying process was not performed after the polymerization.

**Comparative Example 4**

Referring to Example 3 of Japanese Patent Application No. 1995-154195 (Japanese Patent Application Laid-Open No. Hei 08-73507), a sheet-type super absorbent polymer was prepared by the following method.

A monomer composition containing 36 g of acrylic acid, 14.9 g of triethanolamine, 8.4 g of potassium hydroxide, 0.05 g of trimethylolpropane triacrylate, 14.8 g of deionized water, 0.1 g of potassium persulfate, 0.0025 g of L-ascorbic acid, and 0.7 g of hydroxyethyl cellulose was prepared. This monomer composition was sandwiched between two Teflon sheets and subjected to thermal polymerization in a hot air dryer at 80 °C under the condition of a clearance of 1 mm to obtain a sheet-type super absorbent polymer having a thickness of 1.099 mm. The moisture content of the prepared super absorbent polymer was found to be 10.4 wt%, and a separate drying process was not performed after the polymerization.

## Comparative Example 5

A super absorbent polymer film was prepared in the same manner as in Example 1, except that glycerin was added in an amount of 120 parts by weight based on 100 parts by weight of acrylic acid.

## Comparative Example 6

Referring to Example 14 of Japanese Patent Application Laid-Open No. Hei 09-183856, a sheet-type super absorbent polymer was prepared by the following method.
In a 1L beaker, 400 ml of cyclohexane and 1.6 g of sucrose fatty acid ester surfactant with an HLB value of 6 were added and stirred to prepare a reaction solvent for reverse-phase suspension polymerization.
In 110.7 g of a monomer aqueous solution having a solid content of 35 % of acrylic acid and sodium acrylate (degree of neutralization: 75%) as monomer components, 5.85 mg of N,N-methylenebisacrylamide as an internal cross-linking agent and 193.6 mg of hydroxyethyl cellulose (HEC) as a thickener were dissolved to prepare a monomer aqueous solution. Then, 58.5 mg of potassium persulfate, a polymerization initiator, was added and dissolved while bubbling nitrogen gas in the monomer aqueous solution.
A monomer aqueous solution in which a polymerization initiator was dissolved was added to the prepared reverse-phase suspension polymerization solvent, followed by stirring at 60 °C for 2 hours to proceed with polymerization to obtain a gel polymer.
After drying the obtained polymer at 160 °C, 2 g of glycerin was added to 8 g of the dried polymer particles, and water was sprayed such that the moisture content was 20%. The polymer particles to which glycerin and water were added were uniformly spread on a 10 cm * 10 cm plate, and left in a constant temperature and humidity room (25 °C, RH 90%) for 10 minutes. Subsequently, a sheet-type super absorbent polymer having a thickness of 1.042 mm was prepared by rolling for 5 minutes at a temperature of 150 °C and a pressure of 350 gf/cm$^2$.

[Table 1]

| | Thickness of hydrogel polymer before drying (mm) | Viscosity of monomer composition (mPas) 1) | Degree of neutralization of monomer (%) | Content in monomer composition | | | | | |
| | | | | Solid content (%) | Thickener (parts by weight) | Internal cross-linking agent (ppm) | Thermal initiator (ppm) | Photoinitiator (ppm) | Oxidation/reduction initiator (ppm) |
|---|---|---|---|---|---|---|---|---|---|
| Ex. 1 | 0.1 | 144 | 70 | 54 | 0.35 | 500 | 1000 | 80 | - |
| Ex. 2 | 0.1 | 496 | 70 | 54 | 0.55 | 500 | 1000 | 80 | - |
| Ex. 3 | 0.1 | 753 | 70 | 54 | 0.65 | 500 | 1000 | 80 | - |
| Ex. 4 | 0.1 | 1189 | 70 | 54 | 0.75 | 500 | 1000 | 80 | - |
| Ex. 5 | 0.1 | 201 | 70 | 54 | 0.45 | 2000 | 1000 | 80 | - |
| Ex. 6 | 0.1 | 201 | 70 | 54 | 0.45 | 4000 | 1000 | 80 | - |
| Ex. 7 | 0.3 | 1383 | 70 | 54 | 0.75 | 500 | 1000 | 80 | - |
| Ex. 8 | 0.2 | 332 | 70 | 54 | 0.68 | 2000 | 1000 | 80 | - |
| Ex. 9 | 0.2 | 562 | 70 | 54 | 0.45 | 2000 | 1000 | 80 | - |
| Ex. 10 | 0.1 | 215 | 70 | 54 | 0.45 | 1000 | 1000 | 80 | - |
| Ex. 11 | 0.2 | 735 | 70 | 54 | 0.45 | 1000 | 1000 | 80 | - |
| Ex. 12 | 0.2 | 740 | 70 | 54 | 0.45 | 1000 | 1000 | 80 | - |
| Ex. 13 | 0.2 | 755 | 70 | 54 | 0.45 | 1000 | 1000 | 80 | - |
| Comp. Ex. 1 | - | n/a | 75 | 80.3 | 0.99 | 863 | 1079 | - | 27 |

(continued)

| | Thickn ess of hydrog el polyme r before drying (mm) | Viscosi ty of mono mer compo sition (mPas) 1) | Degr ee of neutr alizati on of mono mer (%) | Content in monomer composition | | | | | |
|---|---|---|---|---|---|---|---|---|---|
| | | | | Solid conte nt (%) | Thick ener (parts by weigh t) | Intern al cross-linking agent (ppm) | Ther mal initiat or (ppm) | Photoi nitiator (ppm) | Oxida tion/re ductio n initiat or (ppm) |
| Comp. Ex. 2 | - | n/a | 75 | 80.3 | 0.99 | 863 | 1079 | - | 27 |
| Comp. Ex. 3 | - | n/a | 73 | 79 | 0.98 | 242 | 1152 | - | 29 |
| Comp. Ex. 4 | - | n/a | 68 | 76 | 0.7 | 667 | 1334 | - | 33 |
| Comp. Ex. 5 | 0.1 | 311 | 70 | 62.3 | 0.35 | 500 | 1000 | 80 | |
| Comp. Ex. 6 | - | n/a | 75 | 40 | 0.17 | 200 | 2000 | 0 | 0 |
| 1) TOKI viscometer (TV-22), 1 rpm, Rotor # 1 | | | | | | | | | |

In Table 1, the content of each component except for the thickener in the monomer composition was expressed in wt % or ppm based on the total weight of the monomer composition, and the content of the thickener was expressed in parts by weight based on 100 parts by weight of the solid content in the monomer composition.

Since the monomer compositions of Comparative Examples 1 to 4 contained an oxidation/reduction initiator, polymerization initiated during the measurement, which made it impossible to measure a viscosity of the monomer composition. Since Comparative Example 6 used a reversed-phase suspension polymerization method, a viscosity of the monomer composition was not separately measured.

**Experimental Example 1**

Physical properties of the super absorbent polymer film or sheet of each Example and Comparative Example were measured in the following manner, and the results are shown in Table 2.

(1) Moisture content

The moisture content was calculated with the weight before drying (a) and the weight after drying (b) of the super absorbent polymer film (or sheet) specimen. At this time, the specimen was dried in such a way that the temperature was increased from room temperature (25 °C) to 150 °C over 5 minutes, and then maintained at 150 °C for 15 minutes.

$$\text{Moisture content (\%)} = (a-b)/a*100$$

(2) Thickness of super absorbent polymer film (or sheet)

The thickness was measured at three different arbitrary positions in the super absorbent polymer film (or sheet) using a film thickness meter from Mitutoyo, and the average value thereof was calculated.

(3) Tensile strength (MPa)

A specimen was prepared by cutting the super absorbent polymer film (or sheet) in a rectangular shape of 20 mm x 60 mm such that cut surface is smooth. Then, an initial grip separation of a tensile strength measuring device (TAXTplus, manufactured by Stable Micro Systems) was set to 20 mm, and the specimen was mounted. The specimen was pulled at a rate of 0.5 mm per second to measure the force (N) at fracture, and the tensile strength (MPa) was obtained by dividing the value by the cross-sectional area ($mm^2$) of the specimen.

(4) Yellow index and total light transmittance (%)

The yellow index according to ASTM D1925 and the total light transmittance with respect to visible light were measured using COH-400 (manufactured by NIPPON DENSHOCU).

(5) Centrifugal retention capacity (CRC, g/g)

The centrifugal retention capacity (CRC) was measured in accordance with EDANA WSP 241.2. The moisture content of the super absorbent polymer film and sheet of each Example and Comparative Example to be measured is as shown in Table 2 below, and the centrifugal retention capacity was measured without adjusting the moisture content.

Specifically, the super absorbent polymer film was cut to have a weight (W0) of 0.08 to 0.12 g, put in a non-woven envelope, and sealed. Then, it was immersed in 0.9 wt% sodium chloride aqueous solution (physiological saline) at room temperature. After 30 minutes, the envelope was centrifuged at 250G for 3 minutes to drain, and the weight W2 (g) of the envelope was measured. Further, after carrying out the same operation without using the polymer, the weight W1 (g) of the envelope was measured. Then, CRC (g/g) was calculated by using the obtained weight values according to the following equation.

$$CRC\ (g/g) = \{[W2(g) - W1(g)]/W0(g)\} - 1$$

[Table 2]

| | Moisture content (%) | Thickness of super absorbent polymer film or sheet (mm) | Tensile strength (MPa) | Yellow Index | Total light transmittance (%) | CRC (g/g) |
|---|---|---|---|---|---|---|
| Ex. 1 | 9.93 | 0.091 | 19.9 | 0.83 | 92.01 | 34.1 |
| Ex. 2 | 9.50 | 0.090 | 31.5 | 1.23 | 91.80 | 34.6 |
| Ex. 3 | 9.11 | 0.088 | 23.3 | 1.17 | 91.83 | 35.1 |
| Ex. 4 | 9.69 | 0.090 | 13.8 | 1.19 | 91.85 | 37.7 |
| Ex. 5 | 9.37 | 0.089 | 22.0 | 1.05 | 91.94 | 22.6 |
| Ex. 6 | 9.26 | 0.092 | 30.5 | 0.98 | 91.91 | 13.9 |
| Ex. 7 | 9.09 | 0.224 | 14.4 | 2.55 | 90.37 | 21.5 |
| Ex. 8 | 11.3 | 0.192 | 11.0 | 0.49 | 91.90 | 26.4 |
| Ex. 9 | 11.7 | 0.194 | 13.0 | 0.72 | 90.60 | 23.1 |
| Ex. 10 | 9.89 | 0.086 | 21.2 | 1.01 | 92.32 | 24.5 |
| Ex. 11 | 9.20 | 0.198 | 22.0 | 0.87 | 91.87 | 34.7 |
| Ex. 12 | 10.1 | 0.211 | 31.5 | 1.29 | 87.50 | 35.6 |
| Ex. 13 | 9.00 | 0.197 | 34.2 | 1.11 | 88.00 | 35.2 |
| Comp. Ex. 1 | 8.91 | 0.221 | 0.5 | 1.83 | 90.18 | 22.1 |
| Comp. Ex. 2 | 9.21 | 0.288 | 0.5 | 1.94 | 89.74 | 13.3 |
| Comp. Ex. 3 | 7.57 | 0.232 | 1.4 | 2.51 | 89.50 | 10.9 |
| Comp. Ex. 4 | 10.4 | 1.099 | 0.5 | 2.65 | 84.77 | 5.5 |
| Comp. Ex. 5 | 10.5 | 0.085 | 4.4 | 0.39 | 92.37 | 4.3 |

(continued)

|  | Moisture content (%) | Thickness of super absorbent polymer film or sheet (mm) | Tensile strength (MPa) | Yellow Index | Total light transmittance (%) | CRC (g/g) |
|---|---|---|---|---|---|---|
| Comp. Ex. 6 | 10.5 | 1.042 | 1.6 | 45.2 | 0 | 5.1 |

The super absorbent polymer films of Examples were in the form of a film having high transparency and flexibility, and exhibited a shape different from that of the existing super absorbent polymer sheet. In addition, referring to Tables 2 and 3, it was confirmed that the super absorbent polymer film of Examples 1 to 13 had high total light transmittance of 87.5% or more, indicating transparency, and had a low yellow index of 2.6 or less.

In addition, it was confirmed that the super absorbent polymer films of Examples 1 to 13 had significantly higher tensile strength compared to Comparative Examples 1 to 6, and exhibited excellent absorbency while being thin.

**Experimental Example 2**

In order to confirm the effect of containing the clay as an additive, extractable contents and absorbency under pressure of the super absorbent polymer films of Examples 11 to 13 were measured by the following method, and the results are shown in Table 3.

(1) Extractable contents (EC, wt%)

The extractable contents (EC) was measured in accordance with EDANA WSP 270.2.

Specifically, the super absorbent polymer film was cut to have a weight of 1.0 g, added to 200 g of a 0.9 wt% NaCl aqueous solution, and then kept to be soaked for 16 hours while stirring at 500 rpm. Then, the aqueous solution was filtrated by a filter paper. The filtrated solution was first titrated with a 0.1 N caustic soda solution to a pH of 10.0, and then reverse-titrated with a 0.1 N hydrogen chloride solution to a pH of 2.7. At this time, a polymer material that was not cross-linked was calculated from the amount required for the neutralization, and measured as the extractable contents.

(2) Absorbency under pressure (AUP, g/g)

The absorbency under pressure at 0.7 psi was measured in accordance with EDANA WSP 242.2. The moisture content of the super absorbent polymer film of each Example to be measured is as shown in Table 2 below, and the absorbency under pressure was measured without adjusting the moisture content.

Specifically, a 400 mesh stainless steel screen was installed in a cylindrical bottom of a plastic having an inner diameter of 25 mm. The super absorbent polymer film was cut to have a weight (W3) of about 0.6 g and added on the screen at room temperature and a humidity of 50%. Thereafter, a piston which can uniformly provide a load of 0.7 psi was placed thereon. Herein, the outer diameter of the piston was slightly smaller than 25 mm, there was no gap with the inner wall of the cylinder, and jig-jog of the cylinder was not interrupted. At this time, the weight W4 (g) of the device was measured.

Subsequently, a glass filter having a diameter of 90 mm and a thickness of 5 mm was placed in a petri dish having a diameter of 150 mm, and saline (0.9 wt% sodium chloride) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight W5 (g) was measured.

Then, the absorbency under pressure (g/g) was calculated by using the obtained weight values according to the following equation.

$$AUP(g/g) = [W5(g) - W4(g)]/W3(g)$$

[Table 3]

|  | Ex. 11 | Ex. 12 | Ex. 13 |
|---|---|---|---|
| Thickness of super absorbent polymer film (mm) | 0.198 | 0.211 | 0.197 |

(continued)

|  | Ex. 11 | Ex. 12 | Ex. 13 |
|---|---|---|---|
| Clay content (wt% relative to AA) | 0 | 1 | 1 |
| EC (%) | 12.6 | 11 | 11 |
| AUP (g/g) | 12.7 | 16.5 | 17.2 |

Referring to Tables 2 and 3 above, when clay was further contained in the monomer composition, it was confirmed that tensile strength of the super absorbent polymer film was remarkably improved while maintaining centrifugal retention capacity and extractable contents at the same level, and, accordingly, absorbency under pressure could be further improved.

**Claims**

1. A super absorbent polymer film, comprising a polymer in which an acrylic acid-based monomer having at least partially neutralized acidic groups is polymerized,
   wherein a moisture content is 1% to 15% and a tensile strength is 5 MPa or more.

2. The super absorbent polymer film of Claim 1,
   wherein the tensile strength is 10 MPa to 50 MPa.

3. The super absorbent polymer film of Claim 1,
   wherein a thickness is 0.001 mm to 0.5 mm.

4. The super absorbent polymer film of Claim 1,
   wherein a centrifugal retention capacity (CRC) is 10 g/g or more when measured in accordance with EDANA WSP 241.2.

5. A preparation method of the super absorbent polymer film of Claim 1, comprising the steps of:

   preparing a monomer composition by mixing an acrylic acid-based monomer having at least partially neutralized acidic groups, a cellulose-based thickener, a moisturizing agent, an internal cross-linking agent, a polymerization initiator, and a solvent;
   casting the monomer composition on a substrate to form a monomer composition film;
   forming a hydrogel polymer film by irradiating heat and/or light while drawing the monomer composition film; and
   drying the hydrogel polymer film.

6. The preparation method of the super absorbent polymer film of Claim 5,
   wherein the cellulose-based thickener is at least one selected from the group consisting of nanocellulose, hydroxyethylcellulose, hydroxypropylcellulose, hydroxyethylmethylcellulose, hydroxypropylmethylcellulose, and sodium carboxymethylcellulose.

7. The preparation method of the super absorbent polymer film of Claim 5,
   wherein the moisturizing agent is at least one selected from the group consisting of glycerin; diglycerin; ethylene glycol; propylene glycol; butylene glycol; sorbitol; polyethylene glycol; polyglycerin-3; polyglycerin-6; polyglycerin-10; an ester compound of polyglycerin-10 and a C3 to C18 saturated fatty acid; citric acid; triethyl citrate; methyl citrate; sodium citrate; and trisodium 2-methylcitrate.

8. The preparation method of the super absorbent polymer film of Claim 5,
   wherein the cellulose-based thickener is contained in an amount of 0.01 to 5 parts by weight based on 100 parts by weight of the solid content in the monomer composition.

9. The preparation method of the super absorbent polymer film of Claim 5,
   wherein the moisturizing agent is contained in an amount of 5 to 70 parts by weight based on 100 parts by weight of the acrylic acid-based monomer.

**10.** The preparation method of the super absorbent polymer film of Claim 5,
wherein the monomer composition has a viscosity at 25 °C of 100 mPa·s or more.

**11.** The preparation method of the super absorbent polymer film of Claim 5,
wherein tension applied to the monomer composition film in the step of forming the hydrogel polymer film is 40 to 100 N/m.

**12.** The preparation method of the super absorbent polymer film of Claim 5,
wherein the monomer composition further contains at least one clay selected from the group consisting of montmorillonite, saponite, nontronite, laponite, beidelite, hectorite, vermiculite, magadiite, kaolin, serpentine, and mica.

**13.** The preparation method of the super absorbent polymer film of Claim 12,
wherein the clay is contained in an amount of 0.1 to 5 parts by weight based on 100 parts by weight of the acrylic acid-based monomer.

**14.** The preparation method of the super absorbent polymer film of Claim 12,
wherein a size of the clay is 1 nm to 10 $\mu$m.

## INTERNATIONAL SEARCH REPORT

| International application No. |
|---|
| **PCT/KR2021/003545** |

| A. | CLASSIFICATION OF SUBJECT MATTER |
|---|---|

**C08J 5/18**(2006.01)i; **C08F 20/06**(2006.01)i; **C08F 2/44**(2006.01)i; **C08K 3/34**(2006.01)i; **C08K 5/053**(2006.01)i; **C08L 33/04**(2006.01)i; **C08L 1/28**(2006.01)i; **B29C 41/24**(2006.01)i; **B29C 41/46**(2006.01)i

According to International Patent Classification (IPC) or to both national classification and IPC

| B. | FIELDS SEARCHED |
|---|---|

Minimum documentation searched (classification system followed by classification symbols)

C08J 5/18(2006.01); A61F 13/00(2006.01); A61L 15/22(2006.01); A61L 15/60(2006.01); B01J 20/24(2006.01); B01J 20/30(2006.01); C08F 220/06(2006.01); C08F 251/02(2006.01); C08J 3/12(2006.01); C08L 1/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer, SAP), 필름(film), 아크릴산(acrylic acid), 셀룰로오스(cellulose), 증점제(thickening agent), 보습제(moisturizer), 캐스팅(casting), 연신(stretching), 인장 강도(tensile strength)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0071619 A (LG CHEM, LTD.) 24 June 2019 (2019-06-24)<br>See paragraphs [0064], [0065], [0075], [0076] and [0080]; claim 1; and example 1. | 1-14 |
| Y | KR 10-2008-0034470 A (DOW WOLFF CELLULOSICS GMBH) 21 April 2008 (2008-04-21)<br>See paragraphs [0025] and [0026]; claim 1; and example 1. | 1-14 |
| Y | KR 10-2004-0070245 A (KIMBERLY-CLARK WORLDWIDE, INC.) 06 August 2004 (2004-08-06)<br>See pages 3 and 9; claim 69; example 1; and table 2. | 1-14 |
| Y | KR 10-1647166 B1 (EVONIK CORPORATION) 09 August 2016 (2016-08-09)<br>See claims 1 and 5. | 12-14 |
| A | CN 110423308 A (BEIJING MUNICIPAL CONSTRUCTION CO., LTD. et al.) 08 November 2019 (2019-11-08)<br>See entire document. | 1-14 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 July 2021** | **02 July 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/003545** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 6852813 B2 (DARLINGTON, J. W., Jr. et al.) 08 February 2005 (2005-02-08)<br>See entire document. | 1-14 |
| A | US 2011-0301027 A1 (BITIS, R. et al.) 08 December 2011 (2011-12-08)<br>See entire document. | 1-14 |

Form PCT/ISA/210 (second sheet) (July 2019)

<table>
<tr><td colspan="2"><b>INTERNATIONAL SEARCH REPORT</b><br>Information on patent family members</td><td colspan="2">International application No.<br><br><b>PCT/KR2021/003545</b></td></tr>
</table>

| Patent document cited in search report | | | Publication date (day/month/year) | Patent family member(s) | | | Publication date (day/month/year) |
|---|---|---|---|---|---|---|---|
| KR | 10-2019-0071619 | A | 24 June 2019 | CN | 111465636 | A | 28 July 2020 |
| | | | | EP | 3708608 | A1 | 16 September 2020 |
| | | | | JP | 2021-504530 | A | 15 February 2021 |
| | | | | KR | 10-2230189 | B1 | 19 March 2021 |
| | | | | US | 2020-0384441 | A1 | 10 December 2020 |
| | | | | WO | 2019-117670 | A1 | 20 June 2019 |
| KR | 10-2008-0034470 | A | 21 April 2008 | AT | 422524 | T | 15 February 2009 |
| | | | | AU | 2006-281730 | A1 | 22 February 2007 |
| | | | | BR | PI0616503 | A2 | 21 June 2011 |
| | | | | CA | 2617393 | A1 | 22 February 2007 |
| | | | | CN | 101243131 | A | 13 August 2008 |
| | | | | CN | 101243131 | B | 21 March 2012 |
| | | | | EP | 1915425 | A2 | 30 April 2008 |
| | | | | EP | 1915425 | B1 | 11 February 2009 |
| | | | | JP | 2009-504853 | A | 05 February 2009 |
| | | | | JP | 5069237 | B2 | 07 November 2012 |
| | | | | MX | 2008002164 | A | 22 April 2008 |
| | | | | PL | 1915425 | T3 | 30 April 2009 |
| | | | | RU | 2008110055 | A | 27 September 2009 |
| | | | | TW | 200720343 | A | 01 June 2007 |
| | | | | US | 2007-0088106 | A1 | 19 April 2007 |
| | | | | US | 7683110 | B2 | 23 March 2010 |
| | | | | WO | 2007-019963 | A2 | 22 February 2007 |
| | | | | WO | 2007-019963 | A3 | 31 May 2007 |
| KR | 10-2004-0070245 | A | 06 August 2004 | AR | 037922 | A1 | 22 December 2004 |
| | | | | AU | 2002-348221 | A1 | 24 July 2003 |
| | | | | EP | 1463540 | A1 | 06 October 2004 |
| | | | | JP | 2005-514472 | A | 19 May 2005 |
| | | | | US | 2003-0134102 | A1 | 17 July 2003 |
| | | | | US | 2004-0116287 | A1 | 17 June 2004 |
| | | | | US | 6861477 | B2 | 01 March 2005 |
| | | | | US | 6956009 | B2 | 18 October 2005 |
| | | | | WO | 03-057268 | A1 | 17 July 2003 |
| KR | 10-1647166 | B1 | 09 August 2016 | BR | PI0920242 | A2 | 18 August 2015 |
| | | | | BR | PI0920242 | B1 | 29 December 2020 |
| | | | | CN | 102186508 | A | 14 September 2011 |
| | | | | CN | 102186508 | B | 02 July 2014 |
| | | | | CN | 104072928 | A | 01 October 2014 |
| | | | | CN | 104072928 | B | 12 April 2017 |
| | | | | EP | 2334344 | A1 | 22 June 2011 |
| | | | | EP | 2334344 | B1 | 21 February 2018 |
| | | | | JP | 2012-505940 | A | 08 March 2012 |
| | | | | JP | 5380541 | B2 | 08 January 2014 |
| | | | | KR | 10-2011-0086057 | A | 27 July 2011 |
| | | | | TW | 201026756 | A | 16 July 2010 |
| | | | | TW | I526478 | B | 21 March 2016 |
| | | | | US | 2010-0100066 | A1 | 22 April 2010 |
| | | | | US | 2012-0271260 | A1 | 25 October 2012 |
| | | | | US | 2015-0157759 | A1 | 11 June 2015 |
| | | | | US | 8222477 | B2 | 17 July 2012 |

Form PCT/ISA/210 (patent family annex) (July 2019)

INTERNATIONAL SEARCH REPORT
Information on patent family members

International application No.

PCT/KR2021/003545

| Patent document cited in search report | | | Publication date (day/month/year) | Patent family member(s) | | | Publication date (day/month/year) |
|---|---|---|---|---|---|---|---|
| | | | | US | 8962910 | B2 | 24 February 2015 |
| | | | | WO | 2010-046265 | A1 | 29 April 2010 |
| CN | 110423308 | A | 08 November 2019 | None | | | |
| US | 6852813 | B2 | 08 February 2005 | AU | 2003-236448 | A1 | 08 April 2004 |
| | | | | AU | 2003-236448 | B2 | 04 December 2008 |
| | | | | CN | 100354468 | C | 12 December 2007 |
| | | | | CN | 101172225 | A | 07 May 2008 |
| | | | | CN | 101172225 | B | 02 November 2011 |
| | | | | CN | 1497096 | A | 19 May 2004 |
| | | | | EP | 1402944 | A2 | 31 March 2004 |
| | | | | EP | 1402944 | A3 | 20 February 2008 |
| | | | | KR | 10-1083869 | B1 | 15 November 2011 |
| | | | | KR | 10-2004-0027380 | A | 01 April 2004 |
| | | | | NO | 20034259 | L | 26 March 2004 |
| | | | | NO | 332837 | B1 | 21 January 2013 |
| | | | | PL | 212890 | B1 | 31 December 2012 |
| | | | | PL | 362421 | A1 | 05 April 2004 |
| | | | | US | 2004-0059071 | A1 | 25 March 2004 |
| US | 2011-0301027 | A1 | 08 December 2011 | AU | 2009-327592 | A1 | 24 June 2010 |
| | | | | AU | 2009-327592 | B2 | 12 February 2015 |
| | | | | CN | 102245218 | A | 16 November 2011 |
| | | | | CN | 102245218 | B | 22 October 2014 |
| | | | | CO | 6331449 | A2 | 20 October 2011 |
| | | | | EP | 2373352 | A1 | 12 October 2011 |
| | | | | EP | 2373352 | B1 | 06 November 2013 |
| | | | | JP | 2012-512739 | A | 07 June 2012 |
| | | | | JP | 5604444 | B2 | 08 October 2014 |
| | | | | RU | 2011129809 | A | 27 January 2013 |
| | | | | RU | 2503465 | C2 | 10 January 2014 |
| | | | | US | 9162007 | B2 | 20 October 2015 |
| | | | | WO | 2010-071584 | A1 | 24 June 2010 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200035147
- KR 1020200114811
- KR 1020210036931

- JP HEI0873507 A
- JP HEI09183856 A
- JP 7154195 A

**Non-patent literature cited in the description**

- **REINHOLD SCHWALM.** UV Coatings: Basics, Recent Developments and New Application. Elsevier, 2007, 115

- **ODIAN.** Principle of Polymerization. Wiley, 1981, 203